# EUROPEAN PATENT SPECIFICATION

(11) **EP 2 160 041 B1**
(45) Date of publication and mention of the grant of the patent: **07.11.2018**
(21) Application number: 07845921.1
(22) Date of filing: 13.12.2007
(51) Int. Cl.: H04L 29/06, H04L 29/08, H04W 8/24, H04W 84/00, H04W 76/12

(54) **METHOD AND SYSTEM FOR CONFIGURING A SERVICE BY A TERMINAL**
VERFAHREN UND SYSTEM ZUM DIENSTKONFIGURIEREN MITTELS EINES ENDGERÄTS
PROCÉDÉ ET SYSTÈME SERVANT À CONFIGURER UN SERVICE PAR UN TERMINAL

(30) Priority: 15.05.2007 CN 200710107906
(43) Date of publication of application: 03.03.2010
(73) Proprietor: ZTE Corporation, Shenzhen, Guangdong 518057 (CN)
(72) Inventor: SHEN, Min, Guangdong 518057 (CN); SHEN, Chengnian, Guangdong 518057 (CN); ZHANG, Lu, Guangdong 518057 (CN); ZHU, Weiyong, Guangdong 518057 (CN)
(74) Representative: Schröer, Gernot H.
(86) International application number: PCT/CN2007/003576
(87) International publication number: WO 2008/138186

(56) References cited:
- CN-A- 1 503 524
- CN-A- 1 553 674
- US-A1- 2006 062 251
- US-A1- 2006 095 501
- LORETO S TERRILL ERICSSON S: "Input 3rd-Generation Partnership Project (3GPP) Communications Service Identifiers Requirements on the Session Initiation Protocol (SIP); draft-loreto-sipping-3gpp-ics-requirements -00.txt", 20060616, 16 June 2006 (2006-06-16), XP015046015, ISSN: 0000-0004
- Anonymous: "Unstructured Supplementary Service Data", , 10 May 2007 (2007-05-10), XP055160593, Retrieved from the Internet: URL:http://en.wikipedia.org/w/index.php?ti tle=Unstructured_Supplementary_Service_Dat a&oldid=129910624 [retrieved on 2015-01-08]
- Anonymous: "IP Multimedia Subsystem", , 14 May 2007 (2007-05-14), XP055160597, Retrieved from the Internet: URL:http://en.wikipedia.org/w/index.php?ti tle=IP_Multimedia_Subsystem&oldid=13090815 9 [retrieved on 2015-01-08]

## Description

### Technical Field

The present invention relates to the field of wireless communication, and particularly to a method and system for performing service configuration on a terminal in the next generation network (NGN).

### Background of the Invention

In the next generation network (NGN) with the IP multimedia sub-system (IMS) as the core, the Session Initiation Protocol (SIP) is adopted as the service control protocol, and various communication services are implemented by the cooperation between intelligent terminals of users and application servers (AS) deployed by the operator.

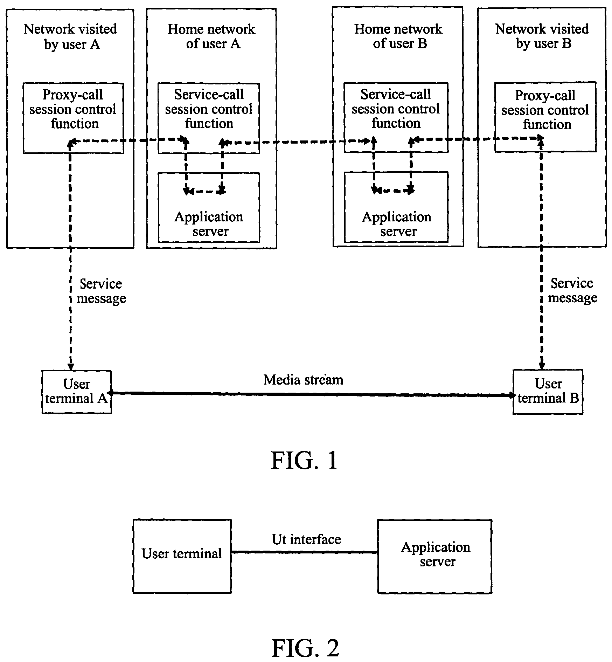

FIG. 1 illustrates a typical service implementation framework in the next generation network, wherein, an application server (AS) (possibly multiple, respectively used in different services) connects with the service-call session control function (S-CSCF) of the home network of a user via an interface, and a SIP service control message (indicated by the dashed line) between user terminal A and user terminal B passes through the respective application servers (according to the type of user services, possibly passes through different application servers), and the application servers can implement abundant services by processing the service control message in various ways. User terminal A and user terminal B utilize service messages to interchange and negotiate media parameters supported by both parties, so that a media stream connection (indicated by solid line) can be established between them, and the media stream is used to transfer data such as voice packets of a session.

An AS stores configuration data related to particular users and particular services (referred to as service configuration data for short hereinafter), such as whether the user registers a call forwarding service; which number the user expects to forward the call to; whether the user registers a call barring service; which incoming numbers the user expects to bar; and the like. By setting different service configuration data for different users, users can be provided with personalized services.

For the ease of usage by users, present technical specifications allow users to inquire and modify the service configuration data in ASs on terminals. A specific method is shown in FIG. 2. A user terminal connects with an application server via an IP network, with an Ut interface between them. The interface utilizes the protocol of XCAP (Extensible Markup Language (XML) Configuration Access Protocol). Service configuration information of the user is organized in the format of XML and transferred between the user terminal and the application server via the protocol of XCAP, so that the user terminal can inquire, set, or delete the service configuration data in the application server.

The above prior art can meet the need of inquiring and setting the service configuration data by the user on a terminal, but this technique requires the user terminal to support XML and XCAP, and thus requirement for the user terminal is relatively high. However, a lot of NGN terminals available only support the protocol of SIP (have the ability of making calls) and do not support XML and XCAP, so the service configuration function cannot be implemented.

A service configuration method is also known from LORETO S TERRILL ERICSSON S: "Input 3rd-Generation Partnership Project (3GPP) Communications Service Identifiers Requirements on the Session Initiation Protocol (SIP); draft-loreto-sipping-3gpp-ics-requirements-00.txt",20060616, 16 June 2006 (2006-06-16), XP015046015, ISSN: 0000-0004. Relevant technologies are also known from US 2006/095501 A1 (MOCHIDA NAOYUKI [JP]) 4 May 2006 (2006-05-04).

### Summary of the Invention

The technical problem to be solved by the present invention is to provide a method and system for performing service configuration on a terminal, so that terminals are merely required to support the basic SIP to implement the service configuration.

The features of the method and system according to the present invention are defined in the independent claims 1 and 5, and the preferable features according to the present invention are defined in the dependent claims 2-4 and 6.

### Brief Description of the Drawings

FIG. 1 is a diagram of typical service implementation framework of the NGN in the prior art;
FIG. 2 is a schematic diagram of the interface relationship between a user terminal and an application server in the prior art;
FIG. 3 is a flow chart of the first embodiment of the present invention;
FIG. 4 is a flow chart of the optimized first embodiment of the present invention;
FIG. 5 is a flow chart of the second embodiment of the present invention;
FIG. 6 is a flow chart of the third embodiment of the present invention.

### Preferred Embodiments

The present invention will be described in detail, referring to the accompanying figures, and in combination with embodiments.

The service configuration function referred to in this specification comprises inquiring and setting the service configuration data, and modification of the service configuration data may also be regarded as setting the service configuration data.

By deploying one or more special service configuration ASs in the NGN network, users are provided with the ability to inquire and set the service configuration data on user terminals. The operator assigns specific service configuration codes and sets S-CSCFs so that when receiving a SIP message whose target address is a service configuration code from a user, an S-CSCF forwards the SIP message to a service configuration AS. The service configuration AS is required to support the service configuration code.

The S-CSCF is equipped with a service configuration code judgment module which forwards a SIP message to the service configuration AS after determining that the target address of the SIP message is a service configuration code or said SIP message carries a service configuration code.

The service configuration code should differ from a common user number for the ease of identification by S-CSCF. For example, the service configuration code may start with "*" or "#", or the service configuration code starts with a special number segment. If used for setting service, the service configuration code should comprise service configuration information of a user, including service category information and configuration information related to the service (such as register or deregister of the service), and so on; and if used for inquiring service, the service configuration code should comprise service category information.

For example, a setting rule for the service configuration code is as follows:

"Prefix + service code+ separator + specific configuration information + end suffix"

Wherein, said prefix is "*"; said service code relates to a specific service and whether the service is registered, for instance, "99" represents registering unconditional call forwarding, "990" represents deregistering the unconditional call forwarding, "98" represents registering call forwarding on terminal shutdown, "980" represents deregistering the call forwarding on terminal shutdown; the separator adopts "*" as separation between the service code and specific configuration information; said specific configuration information is set depends on the service code, for example, if the service code is "99" or "98", the specific configuration information is the number which the user expects to forward the call to, and if the service code is "990" or "980", the specific configuration information is null; said end suffix adopts "#" to indicate the end of the service configuration code.

The above setting rule for the service configuration code is just an illustration, but not limitation to the present invention.

### The first embodiment

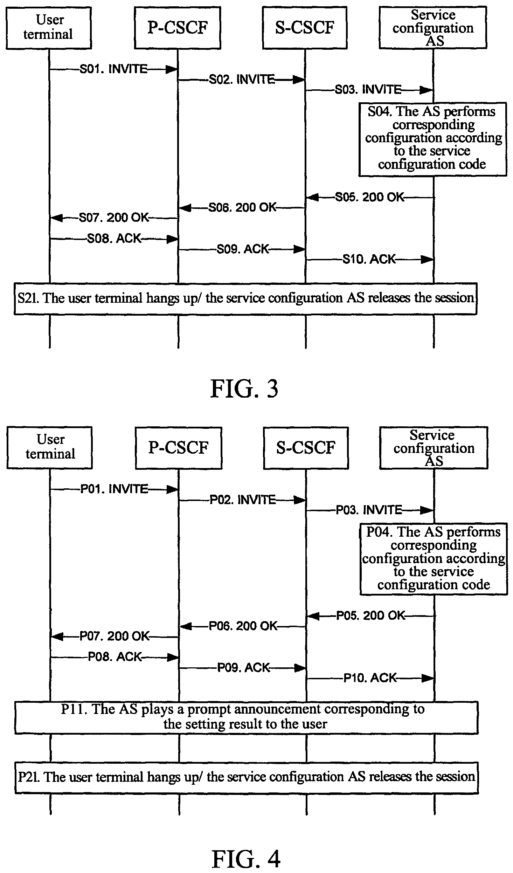

When a user inquires and sets the service configuration data on a user terminal, he/she merely needs to directly dial the service configuration code, and the flow is shown in FIG. 3, which comprises the following steps:
Step S01: the user terminal sends an INVITE message in the SIP to the proxy-call session control function (P-CSCF) in the network visited, wherein the target address is a service configuration code;
Step S02: the P-CSCF forwards the INVITE message to the S-CSCF in the home network of the user;
Step S03: the S-CSCF identifies the target address in the INVITE as a service configuration code, then forwards this message to the service configuration AS corresponding to the service configuration code;
Step S04: the service configuration AS extracts the service configuration code in the target address of the message, and performs corresponding processing (configuration or inquiry) according to the content of the service configuration code;
Step S05: the service configuration AS returns a response of success (200 OK) to the S-CSCF;
Step S06: the S-CSCF forwards said response of success (200 OK) to the P-CSCF;
Step S07: the P-CSCF forwards said response of success (200 OK) to the user terminal;
Step S08: after receiving said response of success, the user terminal sends an ACK message to the P-CSCF;
Step S09: the P-CSCF forwards said ACK message to the S-CSCF;
Step S10: the S-CSCF forwards said ACK message to the service configuration AS to acknowledge that the response of success sent by the service configuration AS is received, and finally a session is established between the user terminal and the service configuration AS.
Step S21: the user terminal actively hangs up or the service configuration AS actively sends a hang up request to the user terminal so as to release the established session between the user terminal and the service configuration AS.

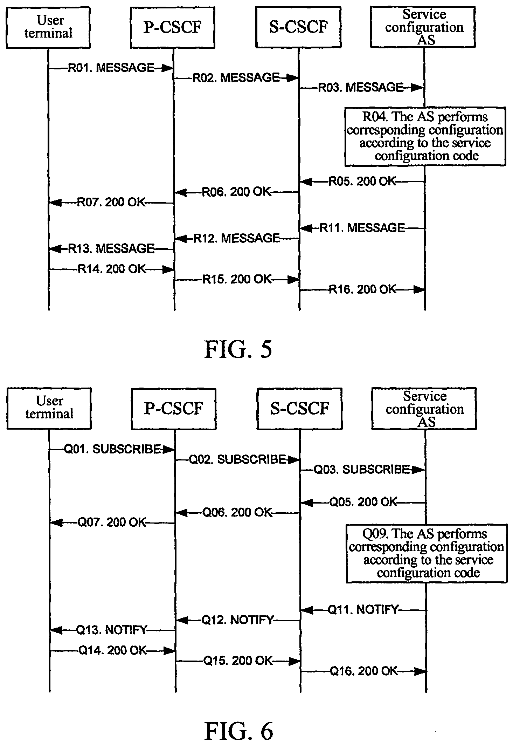

In the above process, for the improvement of the user's experience and the ease of judging whether the service configuration operation is successful by the user, one or a combination of the following methods can be applied:
1) The service configuration AS adds an announcement playing function, and as shown in FIG. 4, after a session is established between the user terminal and the service configuration AS (steps P01∼P10), the AS plays a prompt announcement corresponding to the result of inquiring/setting the service configuration to the user (step P11), such as: "You have successfully registered the unconditional forwarding service, and the forwarding number is ×××××", or "You have successfully cancelled the call forwarding on shutdown service", and the like;
2) During the process in FIG. 3, the message returned to the user terminal by the service configuration AS (such as step S05 in FIG. 3) carries a message body in a form of text, and the text information is the result of inquiring/setting the service configuration data, such as: "You have successfully registered the unconditional forwarding service, and the forwarding number is ×××××", or "You have successfully cancelled the call forwarding on shutdown service", and the like;
3) Using the normal session establishment process (such as steps S01∼S03, S05∼S10 in FIG. 3), a transmission channel which can be used for transmission of textual format media is established between the user terminal and the service configuration AS, and then the AS uses this media channel to transfer textual format media to the user, and the text information is the result of inquiring/setting the service configuration data;
4) The service configuration AS actively sends to the user terminal a message of MESSAGE (such as step R11 in FIG. 5), carrying text information that can reflect the result of inquiring/setting the service configuration data.

If the user performs service inquiry, the inquiry result can also be returned to the user with the above methods.

### The second embodiment

Another method for the user to implement the service configuration function on the user terminal is to utilize the MESSAGE message in the SIP to send a message to the service configuration AS, and the flow is shown in FIG. 5, which comprises the following steps:
Step R01: the user terminal sends a message of MESSAGE in the SIP to the proxy-call session control function (P-CSCF), wherein, the target address is a service configuration code or the number of a service configuration AS; and if the target address is the number of a service configuration AS, a service configuration code is carried in the message of MESSAGE;
Step R02: the P-CSCF forwards this MESSAGE message to the S-CSCF in the home network of the user;
Step R03: the S-CSCF identifies the target address in the MESSAGE as a service configuration code or the number of a service configuration AS, then forwards this MESSAGE message to the service configuration AS;
Step R04: the service configuration AS extracts the service configuration code in the MESSAGE message, and performs corresponding service configuration processing (configuration or inquiry) according to the service configuration code; (Note: this step can also be performed after R05)
Step R05: the service configuration AS returns a response of success (200 OK) to the S-CSCF;
Step R06: the S-CSCF forwards said response of success (200 OK) to the P-CSCF;
Step R07: the P-CSCF forwards said response of success (200 OK) to the user terminal;
In this embodiment, a method as one of the methods 2∼4 in the first embodiment can be applied to help the user to know whether the service configuration operation is successful, for example, it comprises the following steps:
Step R11: the service configuration AS sends to the S-CSCF a message of MESSAGE, carrying information that can reflect the result of setting the service configuration, for example, carrying a text string "You have successfully registered the unconditional forwarding service, and the forwarding number is ×××××", or "You have successfully cancelled the call forwarding on shutdown service";
Step R12: the S-CSCF forwards said MESSAGE message to the P-CSCF;
Step R13: the P-CSCF forwards said MESSAGE message to the user terminal;
Step R14: after receiving said MESSAGE message, the user terminal returns a response of success (200 OK) to the P-CSCF to indicate that the notification message of the result of setting the service configuration is received.
Step R15: the P-CSCF forwards said response of success (200 OK) to the S-CSCF;
Step R16: the S-CSCF forwards said response of success (200 OK) to the service configuration AS;

### The third embodiment

Another method for the user to implement the service configuration function on the user terminal is to utilize the SUBSCRIBE message in the SIP to send a message to the service configuration AS, and the flow is shown in FIG. 6, which comprises the following steps:
Step Q01: the user terminal sends a message of SUBSCRIBE in the SIP to the proxy-call session control function (P-CSCF), wherein the target address is a service configuration code or the number of a service configuration AS; and if the target address is the number of a service configuration AS, a service configuration code is carried in the body of the SUBSCRIBE message;
Step Q02: the P-CSCF forwards this SUBSCRIBE message to the S-CSCF in the home network of the user;
Step Q03: the S-CSCF identifies the target address in the SUBSCRIBE message as a service configuration code or the number of a service configuration AS, and forwards this message to the service configuration AS;
Step Q05: the service configuration AS returns a response of success (200 OK) to the S-CSCF;
Step Q06: the S-CSCF forwards said response of success (200 OK) to the P-CSCF;
Step Q07: the P-CSCF forwards said response of success (200 OK) to the user terminal;
Step Q09: the service configuration AS extracts the service configuration code in the SUBSCRIBE message, and performs corresponding service configuration processing (configuration or inquiry) according to the service configuration code in the SUBSCRIBE message (Note: this step can also be performed before Step Q05);
Step Q11: the service configuration AS sends to the S-CSCF a message of NOTIFY, carrying information that can reflect the result of setting the service configuration, for example, carrying a text string "You have successfully registered the unconditional forwarding service, and the forwarding number is ×××××"; or "You have successfully cancelled the call forwarding on shutdown service";
Step Q12: the S-CSCF forwards said NOTIFY message to the P-CSCF;
Step Q13: the P-CSCF forwards said NOTIFY message to the user terminal;
If steps Q11∼Q13 exist, the following steps should exist:
Step Q14: after receiving said NOTIFY message, the user terminal returns a response of success (200 OK) to the P-CSCF, to indicate that the NOTIFY message of the result of setting the service configuration has been received;
Step Q15: the P-CSCF forwards said response of success (200 OK) to the S-CSCF;
Step Q16: the S-CSCF forwards said response of success (200 OK) to the service configuration AS;

In the above methods, a unified service configuration AS is utilized to provide the function for setting service configuration. If there are multiple ASs providing different services in the network, the unified service configuration AS needs to have configuration functions for all kinds of services; and if a new AS is added to provide a new service in the network, the unified service configuration AS needs to be correspondingly upgraded to provide a configuration function for the new service. To simplify the functions of the unified service configuration AS, a method in which functions of the service configuration AS are distributed into the ASs providing different services may be applied, that is, each AS provides service and simultaneously provides said service configuration function as described in the present invention, and also can be regarded as a service configuration AS, so that the network maintenance is convenient and fast.

To sum up, the SIP messages, utilized in the present invention, are also applicable to a terminal supporting XML and XCAP, besides common SIP terminals, as long as the terminal supports SIP.

Although the present invention is described in combination with the specific embodiments, for those skilled in the art, the present invention may have modifications and variations without departing from the scope of the present invention.

### Industrial Applicability

The present invention provides a method and system for performing service configuration on a terminal, so that service configuration can be performed on a common SIP terminal, and the terminal is merely required to support the basic SIP, without specially supporting XML and XCAP, as a result, users who only have common SIP terminals also can conveniently perform various personalized service configuration.

## Claims

1. A method for performing service configuration on a terminal, comprising configuring service configuration codes and deploying one or more service configuration application servers in a next generation network in advance, said service configuration application server supporting said service configuration codes, and the method further comprising the following steps of:
(a) a user terminal sending a session initiation protocol message to the network, and said session initiation protocol message carrying a service configuration code;
(b) when receiving said session initiation protocol message, the service configuration application server extracting said service configuration code, and performing corresponding service processing according to content of said service configuration code,
wherein a target address of the session initiation protocol message is the service configuration code, the service configuration code is used for service setting, and the service processing comprises setting service conf iguration data,
the method further comprising: in said step (a), a proxy-call session control function receiving the session initiation protocol message sent by the user terminal, and then forwarding the session initiation protocol message to a service-call session control function, and after receiving said session initiation protocol message, said service-call session control function determining that the target address of said session initiation protocol message is the service configuration code, and then forwarding said session initiation protocol message to the service configuration application server,
**characterized in that**, said service configuration code comprises a service code and specific configuration information, wherein said service code relates to a specific service and to whether the specific service is registered, and comprises registering unconditional call forwarding, deregistering the unconditional call forwarding, registering call forwarding on terminal shutdown and deregistering the call forwarding on terminal shutdown; said specific configuration information is set, in the service configuration application server, based on said service code, if said service code is registering unconditional call forwarding or registering call forwarding on terminal shutdown, said specific configuration information is the number of the call forwarding, and if the service code is deregistering the unconditional call forwarding or deregistering the call forwarding on terminal shutdown, the specific configuration information is null.

2. A method of claim 1, wherein, said session initiation protocol message is one of the following messages: INVITE, MESSAGE and SUBSCRIBE.

3. A method of claim 2, after said step (b), further comprising step (c), if said session initiation protocol message is an INVITE message, said service configuration application server notifying the user terminal of a result of the service processing with any one of the following methods:
said service configuration application server playing a prompt announcement corresponding to the result of the service processing to the user terminal;
said service configuration application server returning to the user terminal a message carrying a textual message body including the result of the service processing;
said service configuration application server sending textual format media including the result of the service processing to the user terminal via a media transmission channel between the service configuration application server and the user terminal;
said service configuration application server actively sending a message to the user terminal, and the message carrying a textual message body including the result of the service processing.

4. A method of claim 2, after said step (b), further comprising step (c), if said session initiation protocol message is a MESSAGE or SUBSCRIBE message, said service configuration application server notifying the user terminal of a result of the service processing with any one of the following methods:
said service configuration application server returning to the user terminal a message carrying a textual message body including the result of the service processing;
said service configuration application server sending textual format media including the result of the service processing to the user terminal via a media transmission channel between the service configuration application server and the user terminal;
said service configuration application server actively sending a message to the user terminal, and the message carrying a textual message body including the result of the service processing.

5. A system for performing service setting with a terminal, comprising a user terminal and a service-call session control function, and further comprising a service configuration application server, configured to receive a session initiation protocol message sent by the user terminal and forwarded by said service-call session control function, and perform corresponding service processing according to a service configuration code in said session initiation protocol message;
wherein a target address of the session initiation protocol message is the service configuration code, the service configuration code is used for service setting and the service processing comprises setting service configuration data,
wherein the user terminal is configured to send said session initiation protocol message comprising the target address to said service-call session control function to be forwarded to said service configuration application server,
wherein, said service-call session control function further comprises a service configuration code judgment module, and if the target address of the session initiation protocol message is the service configuration code or said session initiation protocol message carries the service configuration code, the service-call session control function forwards the session initiation protocol message to the service configuration application server,
**characterized in that**, said service configuration code comprises a service code and specific configuration information, wherein said service code relates to a specific service and to whether the specific service is registered, and comprises registering unconditional call forwarding, deregistering the unconditional call forwarding, registering call forwarding on terminal shutdown and deregistering the call forwarding on terminal shutdown; wherein the service configuration application server is configured to set said specific configuration information based on said service code, if said service code is registering unconditional call forwarding or registering call forwarding on terminal shutdown, said specific configuration information is the number of the call forwarding, and if the service code is deregistering the unconditional call forwarding or deregistering the call forwarding on terminal shutdown, the specific configuration information is null.

6. A system of claim 5, wherein, said session initiation protocol message is one of the following messages: INVITE, MESSAGE and SUBSCRIBE.

## Patentansprüche

1. Verfahren zum Durchführen der Dienstkonfiguration auf einem Endgerät, umfassend Konfigurieren von Dienstkonfigurationscodes und Bereitstellen von einem oder mehreren Dienstkonfigurations-Anwendungsservern in einem Netzwerk der nächsten Generation im Voraus, wobei der Dienstkonfigurations-Anwendungsserver die Dienstkonfigurationscodes unterstützt und das Verfahren weiterhin die folgenden Schritte umfasst:
(a) Senden einer Sitzungseinleitungsprotokoll-Nachricht an das Netzwerk durch das Benutzerendgerät, wobei ein Dienstkonfigurationscode in der Sitzungseinleitungsprotokoll-Nachricht enthalten ist;
(b) Nach Empfang der Sitzungseinleitungsprotokoll-Nachricht: Extrahieren des Dienstkonfigurationscodes durch den Dienstkonfigurations-Anwendungsserver sowie Durchführen der entsprechenden Dienstverarbeitung entsprechend dem Inhalt des Dienstkonfigurationscodes,
wobei eine Zieladresse der Sitzungseinleitungsprotokoll-Nachricht der Dienstkonfigurationscode ist, der Dienstkonfigurationscode für die Diensteinstellung verwendet wird und die Dienstverarbeitung die Einstellung von Dienstkonfigurationsdaten umfasst,
wobei das Verfahren weiterhin umfasst: in Schritt (a), Empfangen der vom Benutzerendgerät gesendeten Sitzungseinleitungsprotokoll-Nachricht durch eine Proxy-Anruf-Sitzungssteuerfunktion und anschließende Weiterleitung der Sitzungseinleitungsprotokoll-Nachricht an eine Dienst-Anruf-Sitzungssteuerfunktion, und nach Empfang dieser Sitzungseinleitungsprotokoll-Nachricht Bestimmung durch die Dienst-Anruf-Sitzungssteuerfunktion, dass die Zieladresse dieser Sitzungseinleitungsprotokoll-Nachricht der Dienstkonfigurationscode ist, und anschließende Weiterleitung der Sitzungseinleitungsprotokoll-Nachricht an den Dienstkonfigurations-Anwendungsserver,
**dadurch gekennzeichnet, dass** der Dienstkonfigurationscode einen Dienstcode und spezifische Konfigurationsinformationen umfasst, wobei der Dienstcode sich auf einen spezifischen Dienst und darauf bezieht, ob der spezifische Dienst registriert ist, und die Registrierung von bedingungsloser Anrufweiterleitung, Aufhebung der Registrierung der bedingungslosen Anrufweiterleitung, Registrierung von Anrufweiterleitung nach Endgerät-Abschaltung und Aufhebung der Registrierung der Anrufweiterleitung nach Endgerät-Abschaltung umfasst; wobei die spezifischen Konfigurationsinformationen im Dienstkonfigurations-Anwendungsserver auf der Grundlage des Dienstcodes eingestellt werden, wenn der Dienstcode bedingungslose Anrufweiterleitung registriert oder Anrufweiterleitung nach Endgerät-Abschaltung registriert, wobei die spezifischen Konfigurationsinformationen die Zahl der Anrufweiterleitung ist, und wenn der Dienstcode die Registrierung der bedingungslosen Anrufweiterleitung oder die Registrierung der Anrufweiterleitung nach Endgerät-Abschaltung aufhebt, die spezifischen Konfigurationsinformationen Null sind.

2. Verfahren nach Anspruch 1, wobei die Sitzungseinleitungsprotokoll-Nachricht eine der folgenden Nachrichten ist: INVITE, MESSAGE und SUBSCRIBE [EINLADEN, NACHRICHT und ABONNIEREN].

3. Verfahren nach Anspruch 2, das nach Schritt (b) weiterhin den Schritt (c) umfasst, wenn die Sitzungseinleitungsprotokoll-Nachricht eine INVITE [EINLADEN]-Nachricht ist, wobei der Dienstkonfigurations-Anwendungsserver das Benutzerendgerät über ein Ergebnis der Dienstverarbeitung mittels einer der folgenden Verfahren benachrichtigt:
Abspielen einer sofortigen Ansage durch den Dienstkonfigurations-Anwendungsserver, die dem Ergebnis der Dienstverarbeitung entspricht, an das Benutzerendgerät;
Zurücksenden einer Nachricht mit einem Textnachrichtenteil, der das Ergebnis der Dienstverarbeitung enthält, an das Benutzerendgerät durch den Dienstkonfigurations-Anwendungsserver;
Senden von Textformat-Medien, einschließlich das Ergebnis der Dienstverarbeitung, an das Benutzerendgerät durch den Dienstkonfigurations-Anwendungsserver über einen Medien-Übertragungskanal zwischen dem Dienstkonfigurations-Anwendungsserver und dem Benutzerendgerät;
Aktives Senden einer Nachricht an das Benutzerendgerät durch den Dienstkonfigurations-Anwendungsserver, wobei die Nachricht einen Textnachrichtenteil enthält, der das Ergebnis der Dienstverarbeitung enthält.

4. Verfahren nach Anspruch 2, das nach Schritt (b) weiterhin den Schritt (c) umfasst, wenn die Sitzungseinleitungsprotokoll-Nachricht eine MESSAGE- oder SUBSCRIBE-Nachricht ist, wobei der Dienstkonfigurations-Anwendungsserver das Benutzerendgerät über ein Ergebnis der Dienstverarbeitung mittels einer der folgenden Verfahren benachrichtigt:
Zurücksenden einer Nachricht mit einem Textnachrichtenteil, der das Ergebnis der Dienstverarbeitung enthält, an das Benutzerendgerät durch den Dienstkonfigurations-Anwendungsserver;
Senden von Textformat-Medien, einschließlich das Ergebnis der Dienstverarbeitung, an das Benutzerendgerät durch den Dienstkonfigurations-Anwendungsserver über einen Medien-Übertragungskanal zwischen dem Dienstkonfigurations-Anwendungsserver und dem Benutzerendgerät;
Aktives Senden einer Nachricht an das Benutzerendgerät durch den Dienstkonfigurations-Anwendungsserver, wobei die Nachricht einen Textnachrichtenteil enthält, der das Ergebnis der Dienstverarbeitung enthält.

5. System zur Durchführung der Diensteinstellung mit einem Endgerät, umfassend ein Benutzerendgerät und eine Dienst-Anruf-Sitzungssteuerfunktion, und weiterhin umfassend einen Dienstkonfigurations-Anwendungsserver, dazu ausgelegt, eine vom Benutzerendgerät gesendete und von der Dienst-Anruf-Sitzungssteuerfunktion weitergeleitete Sitzungseinleitungsprotokoll-Nachricht zu empfangen sowie die entsprechende Dienstverarbeitung gemäß einem Dienstkonfigurationscode in der Sitzungseinleitungsprotokoll-Nachricht durchzuführen;
wobei eine Zieladresse der Sitzungseinleitungsprotokoll-Nachricht der Dienstkonfigurationscode ist, der Dienstkonfigurationscode zur Diensteinstellung verwendet wird und die Dienstverarbeitung das Einstellen von Dienstkonfigurationsdaten umfasst,
wobei das Benutzerendgerät dazu konfiguriert ist, die Sitzungseinleitungsprotokoll-Nachricht zu senden, was die Weiterleitung der Zieladresse für die Dienst-Anruf-Sitzungssteuerfunktion an den Dienstkonfigurations-Anwendungsserver umfasst,
wobei die Dienst-Anruf-Sitzungssteuerfunktion weiterhin ein Dienstkonfigurationscode-Beurteilungsmodul umfasst, und, wenn die Zieladresse der Sitzungseinleitungsprotokoll-Nachricht der Dienstkonfigurationscode ist oder die Sitzungseinleitungsprotokoll-Nachricht den Dienstkonfigurationscode enthält, die Dienst-Anruf-Sitzungssteuerfunktion die Sitzungseinleitungsprotokoll-Nachricht an den Dienstkonfigurations-Anwendungsserver weiterleitet,
**dadurch gekennzeichnet, dass** der Dienstkonfigurationscode einen Dienstcode und spezifische Informationen umfasst, wobei der Dienstcode sich auf einen spezifischen Dienst bezieht und darauf, ob der spezifische Dienst registriert ist, und er die Registrierung von bedingungsloser Anrufweiterleitung, Aufhebung der Registrierung der bedingungslosen Anrufweiterleitung, Registrierung von Anrufweiterleitung bei Endgerät-Abschaltung und Aufhebung der Registrierung der Anrufweiterleitung bei Endgerät-Abschaltung umfasst;
wobei der Dienstkonfigurations-Anwendungsserver dazu konfiguriert ist, die spezifischen Konfigurationsinformationen auf der Grundlage des Dienstcodes einzustellen, wenn der Dienstcode bedingungslose Anrufweiterleitung registriert oder Anrufweiterleitung bei Endgerätabschaltung registriert, wobei die spezifischen Konfigurationsinformationen die Zahl der Anrufweiterleitung ist, und wenn der Dienstcode die Registrierung der bedingungslosen Anrufweiterleitung oder die Registrierung der Anrufweiterleitung nach Endgerät-Abschaltung aufhebt, die spezifischen Konfigurationsinformationen Null sind.

6. System nach Anspruch 5, wobei die Sitzungseinleitungsprotokoll-Nachricht eine der folgenden Nachrichten ist: INVITE, MESSAGE und SUBSCRIBE [EINLADEN, NACHRICHT und ABONNIEREN].

## Revendications

1. Procédé pour réaliser une configuration de service sur un terminal, comprenant la configuration de codes de configuration de service et le déploiement d'un ou plusieurs serveurs d'application de configuration de service dans un réseau de prochaine génération à l'avance, ledit serveur d'application de configuration de service prenant en charge lesdits codes de configuration de service, et le procédé comprenant en outre les étapes suivantes:
(a) un terminal d'utilisateur envoie un message de protocole d'initiation de session au réseau, et ledit message de protocole d'initiation de session transporte un code de configuration de service;
(b) lors de la réception dudit message de protocole d'initiation de session, le serveur d'application de configuration de service extrait ledit code de configuration de service, et réalise un traitement de service correspondant selon le contenu dudit code de configuration de service, une adresse cible du message de protocole d'initiation de session étant le code de configuration de service, le code de configuration de service étant utilisé pour un réglage de service, et le traitement de service comprenant le réglage de données de configuration de service,
le procédé comprenant en outre: dans ladite étape (a), une fonction de commande de session d'appel de mandataire reçoit le message de protocole d'initiation de session envoyé par le terminal d'utilisateur, puis transfère le message de protocole d'initiation de session à une fonction de commande de session d'appel de service, et, après la réception dudit message de protocole d'initiation de session, ladite fonction de commande de session d'appel de service détermine que l'adresse cible dudit message de protocole d'initiation de session est le code de configuration de service, puis transfère ledit message de protocole d'initiation de session au serveur d'application de configuration de service,
**caractérisé en ce que** ledit code de configuration de service comprend un code de service et des informations de configuration spécifiques, ledit code de service étant associé à un service spécifique et au point de savoir si le service spécifique est ou non enregistré, et comprenant l'enregistrement d'un transfert d'appel inconditionnel, le désenregistrement du transfert d'appel inconditionnel, l'enregistrement d'un transfert d'appel lors de l'arrêt du terminal et le désenregistrement du transfert d'appel lors de l'arrêt du terminal; lesdites informations de configuration spécifiques étant définies, dans le serveur d'application de configuration de service, sur la base dudit code de service, si ledit code de service enregistre un transfert d'appel inconditionnel ou enregistre un transfert d'appel lors de l'arrêt du terminal, lesdites informations de configuration spécifiques étant le numéro du transfert d'appel, et si le code de service désenregistre le transfert d'appel inconditionnel ou désenregistre le transfert d'appel lors de l'arrêt du terminal, les informations de configuration spécifiques étant nulles.

2. Procédé selon la revendication 1, dans lequel ledit message de protocole d'initiation de session est l'un des messages suivants: INVITE, MESSAGE et ABONNEMENT.

3. Procédé selon la revendication 2, comprenant en outre, après ladite étape (b), l'étape (c), si ledit message de protocole d'initiation de session est un message INVITE, ledit serveur d'application de configuration de service notifie au terminal d'utilisateur un résultat du traitement de service avec l'un quelconque des procédés suivants:
ledit serveur d'application de configuration de service lit une annonce d'invite correspondant au résultat du traitement de service au terminal d'utilisateur;
ledit serveur d'application de configuration de service renvoie au terminal d'utilisateur un message transportant un corps de message texte comprenant le résultat du traitement de service;
ledit serveur d'application de configuration de service envoie un contenu multimédia dans un format texte comprenant le résultat du traitement de service au terminal d'utilisateur par l'intermédiaire d'un canal de transmission de contenu multimédia entre le serveur d'application de configuration de service et le terminal d'utilisateur;
ledit serveur d'application de configuration de service envoie de manière active un message au terminal d'utilisateur, et le message transporte un corps de message texte comprenant le résultat du traitement de service.

4. Procédé selon la revendication 2, comprenant en outre, après ladite étape (b), l'étape (c), si ledit message de protocole d'initiation de session est un message MESSAGE ou ABONNEMENT, ledit serveur d'application de configuration de service notifie au terminal d'utilisateur un résultat du traitement de service avec l'un quelconque des procédés suivants:
ledit serveur d'application de configuration de service renvoie au terminal d'utilisateur un message transportant un corps de message texte comprenant le résultat du traitement de service;
ledit serveur d'application de configuration de service envoie un contenu multimédia dans un format texte comprenant le résultat du traitement de service au terminal d'utilisateur par l'intermédiaire d'un canal de transmission de contenu multimédia entre le serveur d'application de configuration de service et le terminal d'utilisateur;
ledit serveur d'application de configuration de service envoie de manière active un message au terminal d'utilisateur, et le message transporte un corps de message texte comprenant le résultat du traitement de service.

5. Système pour réaliser un réglage de service avec un terminal, comprenant un terminal d'utilisateur et une fonction de commande de session d'appel de service, et comprenant en outre un serveur d'application de configuration de service, configuré pour recevoir un message de protocole d'initiation de session envoyé par le terminal d'utilisateur et transféré par ladite fonction de commande de session d'appel de service, et réaliser un traitement de service correspondant selon un code de configuration de service dans ledit message de protocole d'initiation de session;
une adresse cible du message de protocole d'initiation de session étant le code de configuration de service, le code de configuration de service étant utilisé pour un réglage de service et le traitement de service comprenant le réglage de données de configuration de service,
le terminal d'utilisateur étant configuré pour envoyer ledit message de protocole d'initiation de session comprenant l'adresse cible à ladite fonction de commande de session d'appel de service à transférer audit serveur d'application de configuration de service,
ladite fonction de commande de session d'appel de service comprenant en outre un module de détermination de code de configuration de service, et, si l'adresse cible du message de protocole d'initiation de session est le code de configuration de service ou si ledit message de protocole d'initiation de session transporte le code de configuration de service, la fonction de commande de session d'appel de service transfère le message de protocole d'initiation de session au serveur d'application de configuration de service,
**caractérisé en ce que** ledit code de configuration de service comprend un code de service et des informations de configuration spécifiques, ledit code de service étant associé à un service spécifique et au point de savoir si le service spécifique est ou non enregistré, et comprenant l'enregistrement d'un transfert d'appel inconditionnel, le désenregistrement du transfert d'appel inconditionnel, l'enregistrement d'un transfert d'appel lors de l'arrêt du terminal et le désenregistrement du transfert d'appel lors de l'arrêt du terminal; le serveur d'application de configuration de service étant configuré pour définir lesdites informations de configuration spécifiques sur la base dudit code de service, si ledit code de service enregistre un transfert d'appel inconditionnel ou enregistre un transfert d'appel lors de l'arrêt du terminal, lesdites informations de configuration spécifiques étant le numéro du transfert d'appel, et si le code de service désenregistre le transfert d'appel inconditionnel ou désenregistre le transfert d'appel lors de l'arrêt du terminal, les informations de configuration spécifiques étant nulles.

6. Système selon la revendication 5, dans lequel ledit message de protocole d'initiation de session est l'un des messages suivants: INVITE, MESSAGE et ABONNEMENT.
